# EUROPÄISCHE PATENTSCHRIFT

(11) **EP 3 519 250 B1**
(45) Veröffentlichungstag und Bekanntmachung des Hinweises auf die Patenterteilung: **13.05.2020**
(21) Anmeldenummer: 17780324.4
(22) Anmeldetag: 19.09.2017
(51) Int. Cl.: B60K 37/06, B60R 13/02, B60K 35/00, B60K 37/00

(54) **TÜRGRIFF, TÜRINNENVERKLEIDUNG UND FORTBEWEGUNGSMITTEL**
DOOR HANDLE, DOOR INTERIOR TRIM, AND MEANS OF TRANSPORT
POIGNÉE DE PORTE, HABILLAGE INTÉRIEUR DE PORTE ET MOYEN DE LOCOMOTION

(30) Priorität: 28.09.2016 DE 102016218693
(43) Veröffentlichungstag der Anmeldung: 07.08.2019
(73) Patentinhaber: Volkswagen Aktiengesellschaft, 38440 Wolfsburg (DE)
(72) Erfinder: TRABUCCO, Luigi, 38442 Wolfsburg (DE)
(86) Internationale Anmeldenummer: PCT/EP2017/073617
(87) Internationale Veröffentlichungsnummer: WO 2018/060006

(56) Entgegenhaltungen:
- DE-A1-102004 045 885
- DE-A1-102013 016 341
- US-A1- 2012 133 169
- US-A1- 2015 315 839
- US-A1- 2016 129 851

## Beschreibung

### Stand der Technik

Die vorliegende Erfindung betrifft einen Türgriff für ein Fortbewegungsmittel, eine Türinnenverkleidung und ein Fortbewegungsmittel. Insbesondere betrifft die vorliegende Erfindung eine platzsparende und gestalterischen Freiraum wahrende Realisierung einer Einrichtung zur Türbetätigung.

Aufgrund der hohen Anzahl verschiedener Bedienelemente in der Tür von Fortbewegungsmitteln verlieren Anwender, insbesondere bei der Verwendung ihnen nicht bekannter Fahrzeuge, mitunter den Überblick. Zudem geht gestalterischer Freiraum bei der Konzeption von Türinnenverkleidungen verloren. Durch die an verschiedenen Orten positionierten Bedienelemente auf der Türinnenverkleidung wird zudem viel Raum benötigt. Auch die Montage der Bedienelemente ist aufwendig. Zudem leidet das Raumgefühl, welches sich beim Anwender einstellt unter der Vielzahl Bedienelemente.

Für die Bewegung der Tür (zuziehen bzw. aufdrücken der Tür) ist stets ein Türgriff vorgesehen, welcher mit einem stabilen Griffstück die Kraftübertragung auf das Türblatt übernimmt.

DE 10 2004 045 885 A1 offenbart ein Bedienelement für ein Kraftfahrzeug, welches einen Türgriff umfasst. In einer Ausführungsform ist ein Annäherungssensor dazu vorgesehen, bei einer Annäherung des Anwenders eine Beleuchtungsvorrichtung in der Tür anzusteuern. Zusätzlich ist die Beleuchtungsvorrichtung in Abhängigkeit eines Betriebszustandes des Kraftfahrzeugs steuerbar. Hierdurch kann vorgesehen werden, die Beleuchtungsvorrichtung nur dann zu aktivieren, wenn ein Öffnen der Tür zugelassen ist (z. B. im Stillstand).

US 2012/133169 A1, US 2016/129851 A1, US 2015/315839 A1 und DE 10 2013 016341 A1 zeigen berührungsempfindliche Anzeigevorrichtungen, welche im Bereich einer Türverkleidung eines Fortbewegungsmittels angeordnet sind.

Bei der Verwendung in Hardware ausgeführter Bedienelemente sind diese unabhängig von dem Betriebszustand des Fortbewegungsmittels allzeit präsent. Die im Stand der Technik bekannten Anordnungen bleiben hinter den theoretischen Möglichkeiten zurück. Es ist eine Aufgabe der vorliegenden Erfindung, den vorstehend identifizierten Bedarf zu stillen.

### Offenbarung der Erfindung

Die vorstehend identifizierte Aufgabe wird erfindungsgemäß durch einen Türgriff für ein Fortbewegungsmittel gelöst. Das Fortbewegungsmittel kann bspw. ein Pkw, Transporter, Lkw, Luft- und/oder Wasserfahrzeug sein. Der Türgriff umfasst ein Griffstück, welcher zur Kraftübertragung zwischen einer Hand des Anwenders und der Türinnenverkleidung bzw. der Tür dient. Das Griffstück kann bspw. eine Knaufform, eine Bogenform o. Ä. aufweisen oder stegförmig ausgestaltet sein. Auf dem Griffstück ist eine Anzeigeeinrichtung angeordnet, welche z.B. programmierbare Inhalte anzeigen kann. Insbesondere können Symbole, Sinnbilder (Englisch: Icon) durch die Anzeigeeinrichtung dargestellt werden. Die Anzeigeeinrichtung ist bedeckt durch eine Betätigungseinrichtung. Diese kann bspw. als berührungsempfindliche Oberfläche nach Art eines Touchscreens ausgestaltet sein. Anders ausgedrückt, bilden die Betätigungseinrichtung und die Anzeigeeinrichtung eine grafische Anwenderschnittstelle. Erfindungsgemäß ist vorgesehen, in Abhängigkeit eines Betriebszustandes des Fortbewegungsmittels unterschiedliche Schaltflächen auf der Anzeigeeinrichtung zu visualisieren. Auf diese Weise kann Platz eingespart werden und die Übersichtlichkeit der derzeit bedienbaren Schaltflächen bleibt erhalten. Insbesondere können während der Fahrt nicht benötigte Schaltflächen und Funktionen optisch verborgen bzw. der hierfür vorgesehene Platz anderweitig verwendet werden. Dies erfordert nicht, dass andere Schaltflächen anstatt der bisherigen Schaltflächen angezeigt werden müssen. Alternativ kann die Schaltfläche verschwinden bzw. durch optisch ansprechende Erscheinungen ersetzt werden.

Die Unteransprüche zeigen bevorzugte Weiterbildungen der Erfindung.

Bevorzugt kann der Türgriff als Türzuziehgriff ausgestaltet sein. Mit anderen Worten dient der Türgriff zum Zuziehen der Tür in einen geschlossenen Zustand. Hierzu weist der Türgriff hinter der Anzeigeeinrichtung eine von dem Anwender eingreifbare Kavität auf. Mit anderen Worten ist eine Griffmulde o. Ä. auf einer Rückseite der Anzeigeeinrichtung vorgesehen. Dies ist insbesondere dann der Fall, wenn die Anzeigeeinrichtung eine Betrachtungsebene aufweist, welche im Wesentlichen mit der Ebene der Türinnenverkleidung parallel angeordnet ist. Mit anderen Worten liegt in einem solchen Fall die Betrachtungsebene der Anzeigeeinrichtung im Wesentlichen in der X-Z-Ebene (Fahrzeugkoordinatensystem). Alternativ oder zusätzlich kann der Türgriff als Türöffnungsgriff ausgestaltet sein, also eine Oberfläche aufweisen, mittels welcher der Anwender im Fahrzeug sitzend eine Druckkraft auf das Türblatt bzw. die Türinnenverkleidung ausüben kann. Um in einem solchen Fall keine versehentlichen Funktionsaufrufe mittels der Betätigungseinrichtung vorzunehmen, ist die Betätigungseinrichtung bevorzugt eingerichtet, im Ansprechen auf eine vordefinierte Bedingung keine Eingaben mehr entgegenzunehmen. Anders ausgedrückt werden Betätigungen der Betätigungseinrichtung im Ansprechen auf das Vorliegen der vordefinierten Bedingung zumindest nicht mehr zum Anlass für einen Funktionsaufruf genommen. Die vordefinierte Bedingung kann bspw. das Abziehen eines Fahrzeugschlüssels bzw. ein Klemmenwechsel des Fahrzeugs umfassen. Alternativ oder zusätzlich kann das Verriegeln oder Entriegeln eines Gurtschlosses eines Sicherheitsgurtes Bestandteil der vordefinierten Bedingung sein. Alternativ oder zusätzlich kann das Entriegeln der Tür, in welcher sich der Türgriff befindet, Bestandteil der vordefinierten Bedingung bilden. Alternativ oder zusätzlich kann die Betätigung einer Taste, insbesondere zum Öffnen oder Entriegeln der Tür, Bestandteil der vordefinierten Bedingung sein. Auf diese Weise kann die Eingabefläche der Anzeigeeinrichtung/Betätigungseinrichtung auch für die mechanische Bedienung der Tür herangezogen werden.

Die Anzeigeeinrichtung kann bevorzugt eingerichtet sein, ein Entriegelungssymbol für die Tür anzuzeigen. Wählt der Anwender das Entriegelungssymbol, wird ein Motor betätigt, welcher die Tür des Fortbewegungsmittels, in welcher sich der Türgriff befindet, entriegelt. Mit anderen Worten wird der im Stand der Technik üblicherweise als Zughebel ausgestaltete Griff zum Entriegeln der Tür in erfindungsgemäßer Weise erübrigt, zumindest jedoch ergänzt.

Die optische Erscheinung, haptische Anmutung und der Eintrag von Fremdkörpern kann dadurch verringert werden, dass die Betätigungseinrichtung eine gewölbte, insbesondere konvex ausgestaltete Oberfläche aufweist, welche mit einer abseits der Betätigungseinrichtung gelegenen Oberfläche des Griffstücks im Wesentlichen fluchtet. Insbesondere kann auch die Anzeigeeinrichtung eine gewölbte Oberfläche aufweisen, welche mit der gewölbten Oberfläche der Betätigungseinrichtung korrespondiert (im Wesentlichen parallel zu dieser ausgestaltet ist).

Erhebliche Vorteile kann die Verwendung einer elektronischen Papier-Anzeige (Englisch: ePaper, elnk o. Ä.) mit sich bringen. Einerseits kann eine elektronische Papier-Anzeige äußerst dünn und mit gewölbter Oberfläche ausgestaltet werden. Zudem ist die Sichtbarkeit der dargestellten Symbole vergleichsweise unabhängig von den Umgebungsbedingungen. Zudem ist der Energiebedarf zum Betrieb der elektronischen Papier-Anzeige sehr gering, ein Backlight ist nicht erforderlich und die elektronische Papier-Anzeige erwärmt sich im Betrieb nicht wesentlich, was haptisch sehr angenehm für den Anwender ist.

Besonders ergonomisch und sicher kann der erfindungsgemäße Türgriff ausgestaltet werden, indem er zumindest zwei im Wesentlichen in unterschiedliche Richtungen (z.B. rechtwinklig) orientierte Oberflächenbereiche aufweist, welche vom Anwender berührbare Teile der Betätigungseinrichtung darstellen. Insbesondere im Zusammenspiel mit Anwendereingaben, welche zeitgleich auf beiden Oberflächenbereichen ausgeführt werden, können Sicherungsfunktionen realisiert werden. Bspw. kann eine zeitgleiche Betätigung zweier Schaltflächen, von welchen die eine auf dem ersten Oberflächenbereich und die zweite auf dem zweiten Oberflächenbereich angeordnet ist, für einen Funktionsaufruf erforderlich sein. Bspw. kann auch in dem ersten Oberflächenbereich eine Vielzahl Schaltflächen angezeigt werden und auf dem zweiten Oberflächenbereich ein Schiebeelement ("Slider") dargestellt und realisiert werden. Je nachdem, welche Schaltfläche der Anwender auf dem ersten Oberflächenbereich betätigt oder gedrückt hält, kann er eine im Wesentlichen stufenlose Anpassung des Parameters über eine zeitgleiche Betätigung des Sliders vornehmen. Auf diese Weise können bspw. Fensterheber, Lüfterstufen, Temperatureinstellungen etc. ergonomisch angesteuert bzw. vorgenommen werden. Auch das Entriegeln der Tür, an welcher sich der Türgriff befindet, kann durch das Erfordernis einer zeitgleichen Betätigung zweier Schaltflächen, von welchen die erste auf dem ersten Oberflächenbereich und die zweite auf dem zweiten Oberflächenbereich angeordnet ist, abhängig gemacht werden. Auf diese Weise kann eine versehentliche Entriegelung der Tür durch unbeabsichtigtes Berühren einer einzigen Schaltfläche vermieden werden.

Besonders optisch ansprechend kann der Türgriff gestaltet werden, wenn er einteilig mit einer Lautsprecherabdeckung (Englisch "Grill") gefertigt wird. Hierdurch kann die Teilevielzahl reduziert werden. Die Verwendung von zumindest anteilig transparentem Material für die Lautsprecherabdeckung kann den erfindungsgemäßen Türgriff als Bestandteil eines Ambiente-Lichtpaketes qualifizieren. Mit anderen Worten kann ein Leuchtmittel (z. B. RGB-LEDs) hinter der Lautsprecherabdeckung angeordnet werden, um die Lautsprecherabdeckung als Lichtleiter oder Diffusor zu verwenden.

Gemäß einem zweiten Aspekt der vorliegenden Erfindung wird eine Türinnenverkleidung für ein Fortbewegungsmittel vorgeschlagen. Die Türinnenverkleidung kann bspw. für eine Fahrertür, eine Beifahrertür oder eine Fondtür vorgesehen und ausgestaltet sein. Sie umfasst einen Türgriff gemäß dem erstgenannten Erfindungsaspekt und insbesondere auch einen Lautsprecher, welcher zumindest anteilig hinter dem Türgriff angeordnet ist. Über den Lautsprecher kann die Wiedergabe von Signalen eines Multimediasystems (Entertainmentsystem) des Fortbewegungsmittels erfolgen. Hierzu kann der Lautsprecher Teil eines Lautsprecher-Ensembles sein, welches mit inhaltsgleichen Signalen beaufschlagt wird. Alternativ oder zusätzlich kann der Lautsprecher verwendet werden, um Anwendereingaben auf der Betätigungseinrichtung zu quittieren und/oder den Anwender akustisch auf eine auf der Anzeigeeinrichtung dargestellte Ausgabe aufmerksam zu machen.

Gemäß einem dritten Aspekt der vorliegenden Erfindung wird ein Fortbewegungsmittel vorgeschlagen, welches bspw. als Pkw, Transporter, Lkw, Luft- und/oder Wasserfahrzeug ausgestaltet ist. Das Fortbewegungsmittel umfasst einen Türgriff gemäß dem erstgenannten Erfindungsaspekt und/oder eine Türinnenverkleidung gemäß dem zweitgenannten Erfindungsaspekt. Daher verwirklichen sowohl die Türinnenverkleidung als auch das Fortbewegungsmittel die Merkmale, Merkmalskombinationen und die sich aus diesen ergebenden Vorteile des erfindungsgemäßen Türgriffs derart ersichtlich in entsprechender Weise, dass zur Vermeidung von Wiederholungen auf die obigen Ausführungen verwiesen wird.

Weitere Einzelheiten, Vorteile und Merkmale der Erfindung ergeben sich aus den nachfolgenden Erläuterungen unter Bezugnahme auf die beigefügten Zeichnungsfiguren. In den Zeichnungen ist:
- Figur 1: eine perspektivische Darstellung eines Fahrerarbeitsplatzes eines Ausführungsbeispiels eines erfindungsgemäßen Fortbewegungsmittels;
- Figur 2: eine Seitenansicht eines Ausführungsbeispiels eines erfindungsgemäßen Türgriffs;
- Figur 3: eine entlang einer Linie A-A in Figur 2 geschnittene Darstellung des in Figur 2 dargestellten Ausführungsbeispiels des erfindungsgemäßen Türgriffs;
- Figur 4: eine Seitenansicht eines weiteren Ausführungsbeispiels eines erfindungsgemäßen Türgriffs in einem ersten Betriebszustand; und
- Figur 5: eine Seitenansicht eines weiteren Ausführungsbeispiels eines erfindungsgemäßen Türgriffs in einem zweiten Betriebszustand.

### Ausführungsformen der Erfindung:

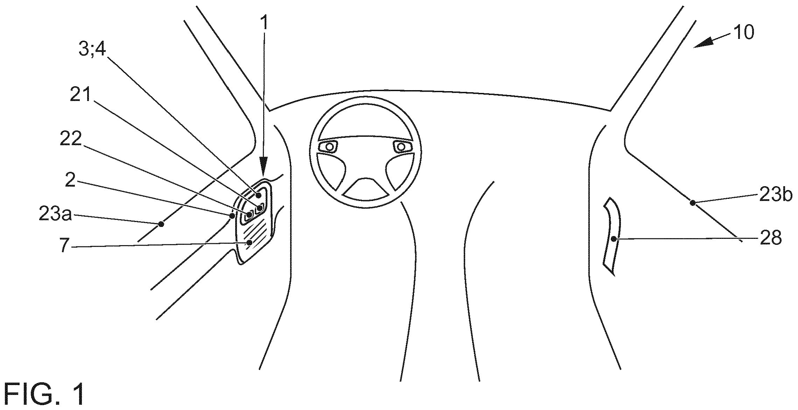

Figur 1 zeigt einen Fahrerarbeitsplatz eines Pkws 10 als Ausführungsbeispiel eines erfindungsgemäßen Fortbewegungsmittels. In der Fahrertür 23a ist ein erfindungsgemäßer Türgriff 1 angeordnet, mittels dessen der Fahrer die Fahrertür 23a zuziehen und aufstoßen kann. Zur Bedienung unterschiedlicher Funktionen sind eine Anzeigeeinrichtung 3 und eine die Anzeigeeinrichtung 3 bedeckende Bedieneinrichtung 4 vorgesehen. In der unteren Hälfte der Anzeigeeinrichtung 3 werden zwei Schaltflächen 21, 22 dargestellt, solange die Fahrertür 23a geschlossen ist und sich der Anwender auf dem Fahrersitz befindet. Zum Vergleich der erfindungsgemäßen Ausgestaltung der Fahrertür 23a ist die Beifahrertür 23b mit einem stegförmigen Türzuziehgriff 28 gemäß dem Stand der Technik ausgestattet. Die optionale Ausführung des Türgriffs 1 mit einem Lautsprechergitter 7 ermöglicht eine optisch einheitliche und damit hochwertige Erscheinung der Türinnenverkleidung der Fahrertür 23a.

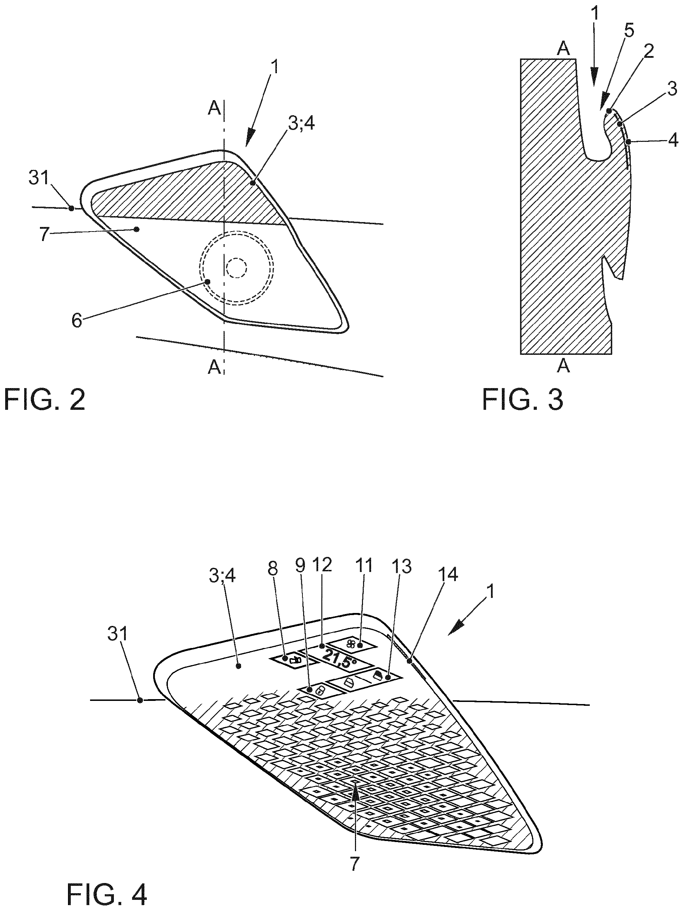

Figur 2 zeigt eine Seitenansicht eines erfindungsgemäß ausgestalteten Türgriffs 1, welcher in einem oberen Bereich seiner Hauptoberfläche eine Anzeigeeinheit 3 nach Art eines elektronischen Papiers mit einer berührungsempfindlichen Oberfläche 4 als Bedieneinrichtung versehen ist. Unterhalb derselben ist ein Lautsprechergitter 7 mit einem dahinter angeordneten Lautsprecher 6 vorgesehen. Der Türgriff 1 weist eine umlaufende Griffmulde 5 auf, wodurch die Anzeigeeinrichtung 3 und die berührungsempfindliche Oberfläche 4 bzw. das Lautsprechergitter 7 hintergriffen werden können, um die mit dem Türgriff 1 versehene Tür zuzuziehen. Die Anzeigeeinrichtung 3 und die berührungsempfindliche Oberfläche 4 befinden sich größtenteils oberhalb einer Armauflage 31, um eine besonders ergonomische Betätigung von Schaltflächen, welche auf der Anzeigeeinrichtung 3 dargestellt werden, zu ermöglichen. Eine Schnittlinie A-A kennzeichnet diejenige Position, entlang welcher zum Erhalt der in Figur 3 dargestellten Schnittdarstellung geschnitten wurde.

Figur 3 zeigt den in Figur 2 dargestellten Türgriff 1 in einer entlang der Linie A-A verlaufenden Schnittlinie erstellten Schnittdarstellung. Aus der Schnittdarstellung nach Figur 3 geht insbesondere eine Ausgestaltung der Griffmulde 5 hervor. Die Griffmulde 5 ermöglicht eine bequeme Ablage der Finger des Anwenders, während der Anwender mit dem Daumen die vor der Anzeigeeinrichtung 3 angeordnete berührungsempfindliche Oberfläche 4 bedienen kann. Ggfs. kann ein (vorliegend nicht dargestellter) kapazitiver oder ultraschallbasierter Sensor verwendet werden, um ein Eingreifen der Griffmulde 5 durch den Anwender zu detektieren und im Ansprechen darauf die berührungsempfindliche Oberfläche 4 zu aktivieren und/oder ggfs. verfügbare Bedienelemente auf der Anzeigeeinrichtung 3 darzustellen. Dies ermöglicht eine energiesparende und optisch ansprechende Ausführung des erfindungsgemäßen Türgriffs 1.

Figur 4 zeigt ein weiteres Ausführungsbeispiel eines erfindungsgemäßen Türgriffs 1 in einem ersten Betriebszustand. Oberhalb der Armauflage 31 werden dem Raster des Lautsprechergitters 7 entsprechende Schaltflächen 8, 9, 11, 12, 13 dargestellt. Die Schaltfläche 8 dient dem Entriegeln der Fahrertür. Die Schaltfläche 9 dient dem Verschließen des Fortbewegungsmittels. Die Schaltfläche 11 dient in Verbindung mit einer auf einer Stirnfläche des Türgriffs 1 dargestellten Sliders 14 der im Wesentlichen stufenlosen Anpassung einer Lüfterstärke. Die Schaltfläche 12 dient einer Erhöhung bzw. Verringerung einer Soll-Temperatur des Luftstroms und ist als zweiteilige Schaltfläche einem Kippschalter nachempfunden. Die Schaltfläche 13 dient dem Anheben bzw. Absenken der Seitenscheiben der Fahrertür. Dies kann insbesondere derart erfolgen, dass der Anwender den oben rechts gelegenen Oberflächenbereich der Schaltfläche 13 mit dem Daumen berührt/hält und mit der Fingerkuppe des Zeigefingers zeitgleich den Slider 14 betätigt, bis die Scheibe einen gewünschten Öffnungsgrad aufweist. Auf diese Weise wird vermieden, dass eine versehentliche Berührung der Schaltfläche 13 alleine bereits zum Schließen der Seitenscheibe führt. Der links unten gelegene Bereich der Schaltfläche 13 dient dem vollständigen Öffnen der Seitenscheibe, ohne dass hierzu der Slider zu betätigen ist. Dies ist aufgrund der nicht vorhandenen Einklemmgefahr beim Öffnen der Seitenscheiben ohne Betätigung des Sliders 14 möglich.

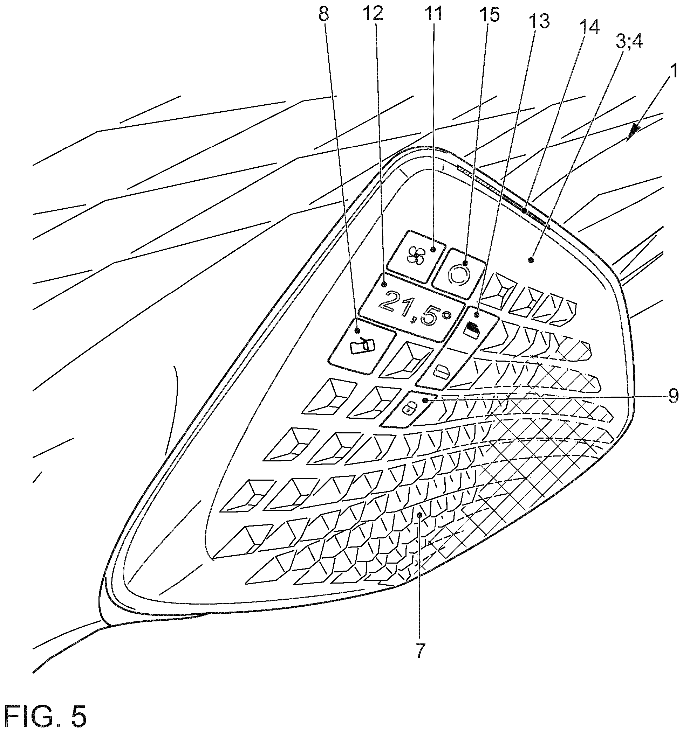

Figur 5 zeigt eine Seitenansicht einer im Wesentlichen mit dem Ausführungsbeispiel nach Figur 4 korrespondierenden Gestaltung eines erfindungsgemäßen Türgriffs 1. Zusätzlich wird eine Schaltfläche 15 angezeigt, mittels welcher der Anwender eine automatische Längs- und Querführung des Fortbewegungsmittels aktivieren kann. Sobald die Betätigung der Schaltfläche 15 erfolgt ist und das Fortbewegungsmittel erfolgreich in den hochautomatisierten Fahrbetrieb gewechselt ist, verschwindet die Schaltfläche 15 zur optischen Bereinigung des Türgriffs 1, bis der Anwender die Kontrolle über das Fahrzeug übernimmt, der hochautomatisierte Fahrbetrieb automatisch beendet und die Schaltfläche 15 erneut angezeigt wird. Nun kann der Anwender erneut durch Betätigen der Schaltfläche 15 in den hochautomatisierten Fahrbetrieb wechseln.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Türgriff
- 2: Griffstück
- 3: Anzeigeeinrichtung
- 4: Betätigungseinrichtung
- 5: Griffmulde
- 6: Lautsprecher
- 7: Lautsprechergitter
- 8, 9: Schaltflächen
- 10: Pkw
- 11, 12, 13: Schaltflächen
- 14: Slider
- 15: Schaltfläche
- 21, 22: Schaltflächen
- 23a: Fahrertür
- 23b: Beifahrertür
- 28: herkömmlicher Türgriff
- 31: Armauflage

## Patentansprüche

1. Türgriff für ein Fortbewegungsmittel (10) umfassend
- ein Griffstück (2),
- eine auf dem Griffstück (2) angeordnete Anzeigeeinrichtung (3), und
- eine Betätigungseinrichtung (4), welche auf der Anzeigeeinrichtung (3) angeordnet ist, wobei die Anzeigeeinrichtung (3) eingerichtet ist, in Abhängigkeit eines Betriebszustandes des Fortbewegungsmittels (10) unterschiedliche Schaltflächen zu visualisieren.

2. Türgriff nach Anspruch 1, wobei der Türgriff (1)
- als Türzuziehgriff ausgestaltet ist, und hierzu hinter der Anzeigeeinrichtung (3) eine von einem Anwender eingreifbare Kavität (5) aufweist und/oder
- als Türöffnungsgriff ausgestaltet ist, und die Betätigungseinrichtung (4) eingerichtet ist, im Ansprechen auf eine vordefinierte Bedingung keine Eingaben mehr entgegen zu nehmen.

3. Türgriff nach Anspruch 1 oder 2, wobei die Anzeigeeinrichtung (3) eingerichtet ist,
- ein Entriegelungssymbol anzuzeigen, bei dessen Anwahl die Betätigungseinrichtung (4) ein Signal zur Entriegelung einer Tür (23a, 23b) des Fortbewegungsmittels (10) ausgibt.

4. Türgriff nach einem der vorstehenden Ansprüche, wobei die Betätigungseinrichtung (4) eine gewölbte, insbesondere konvex ausgestaltete, Oberfläche aufweist, welche mit einer abseits der Betätigungseinrichtung (4) gelegenen Oberfläche des Griffstücks (2) im Wesentlichen fluchtet.

5. Türgriff nach einem der vorstehenden Ansprüche, wobei die Anzeigeeinrichtung (3) als elektronische Papier-Anzeige ausgestaltet ist.

6. Türgriff nach einem der vorstehenden Ansprüche, wobei die Anzeigeeinrichtung (3) und die Betätigungseinrichtung (4) weiter jeweils eine Oberfläche mit zwei in unterschiedliche Richtungen orientierten Oberflächenbereichen aufweisen und die Anzeigeeinrichtung (3) insbesondere eingerichtet ist,
- auf einem ersten Oberflächenbereich eine Vielzahl Schaltflächen (8, 9, 11, 12, 13) anzuzeigen und
- auf dem zweiten Oberflächenbereich ein Schiebeelement (14), nachfolgend "Slider (14)" genannt, anzuzeigen.

7. Türgriff nach Anspruch 6, wobei die Bedieneinrichtung eingerichtet ist, erst im Ansprechen auf eine zeitgleiche Betätigung einer der Schaltflächen (8, 9, 11, 12, 13) und des Sliders (14) ein Signal zur
- Betätigung eines Fensterhebers oder
- Entriegelung einer Tür (23a, 23b)
auszugeben.

8. Türgriff nach einem der vorstehenden Ansprüche weiter umfassend
- eine bevorzugt anteilig transparente Lautsprecherabdeckung (7) und/oder
- eine Lichtquelle zur Erzeugung eines Ambientelichtes.

9. Türinnenverkleidung für ein Fortbewegungsmittel (10) umfassend
- einen Türgriff (1) nach einem der vorstehenden Ansprüche und
- einen Lautsprecher (6), welcher zumindest anteilig hinter dem Türgriff (1) angeordnet ist.

10. Fortbewegungsmittel umfassend einen Türgriff (1) nach einem der vorstehenden Ansprüche 1 bis 8 oder eine Türinnenverkleidung nach Anspruch 9.

## Claims

1. Door handle for a means of transportation (10), comprising
- a handle piece (2),
- a display device (3) arranged on the handle piece (2), and
- an actuating device (4) which is arranged on the display device (3), wherein the display device (3) is configured to visualize different buttons as a function of an operating state of the means of transportation (10).

2. Door handle according to Claim 1, wherein the door handle (1)
- is designed as a door-closing handle, and for this purpose has behind the display device (3) a recess (5) into which a user can grasp, and/or
- is designed as a door-opening handle, and the actuating device (4) is configured to no longer receive inputs in response to a predefined condition.

3. Door handle according to Claim 1 or 2, wherein the display device (3) is configured
- to display an unlock symbol upon whose selection the actuating device (4) outputs a signal for unlocking a door (23a, 23b) of the means of transportation (10).

4. Door handle according to any one of the preceding claims, wherein the actuating device (4) has a curved surface, in particular a convex surface, which is substantially aligned with a surface of the handle piece (2) situated away from the actuating device (4).

5. Door handle according to any one of the preceding claims, wherein the display device (3) is designed as an electronic paper display.

6. Door handle according to any one of the preceding claims, wherein the display device (3) and the actuating device (4) each further comprise a surface with two surface areas oriented in different directions, and the display device (3) is in particular configured
- to display a plurality of buttons (8, 9, 11, 12, 13) on a first surface area, and
- to display a sliding element (14), hereinafter called a "slider" (14), on the second surface area.

7. Door handle according to Claim 6, wherein the operating device is configured to output a signal only in response to a simultaneous actuation of one of the buttons (8, 9, 11, 12, 13) and the slider (14) in order to
- actuate a window regulator, or
- unlock a door (23a, 23b).

8. Door handle according to any one of the preceding claims, further comprising
- a preferably partially transparent loudspeaker cover (7) and/or
- a light source for generating an ambient light.

9. Interior door panel for a means of transportation (10), comprising
- a door handle (1) according to any one of the preceding claims, and
- a loudspeaker (6) which is arranged at least partially behind the door handle (1).

10. Means of transportation, comprising a door handle (1) according to any one of the preceding Claims 1 to 8 or an interior door panel according to Claim 9.

## Revendications

1. Poignée de porte pour un moyen de locomotion (10) comprenant
- une poignée (2),
- un dispositif d'affichage (3) disposé sur la poignée (2), et
- un dispositif d'actionnement (4), lequel est disposé sur le dispositif d'affichage (3), le dispositif d'affichage (3) étant conçu pour visualiser différents boutons en fonction d'un état de fonctionnement du moyen de locomotion (10).

2. Poignée de porte selon la revendication 1, dans laquelle la poignée de porte (1)
- est configurée comme une poignée de fermeture de porte et comporte à cet effet derrière le dispositif d'affichage (3) une cavité (5) qui peut être engagée par un utilisateur et/ou
- est configurée comme une poignée d'ouverture de porte, et le dispositif d'actionnement (4) est conçu pour ne plus accepter d'entrées en réponse à une condition prédéfinie.

3. Poignée de porte selon l'une quelconque des revendications 1 à 2, dans laquelle le dispositif d'affichage (3) est conçu
- pour afficher un symbole de déverrouillage, qui, lorsqu'il est sélectionné, amène le dispositif d'actionnement (4) à émettre un signal de déverrouillage d'une porte (23a, 23b) du moyen de locomotion (10).

4. Poignée de porte selon l'une quelconque des revendications précédentes, dans laquelle le dispositif d'actionnement (4) présente une surface incurvée, en particulier convexe, qui affleure sensiblement une surface de la poignée (2) située à l'écart du dispositif d'actionnement (4).

5. Poignée de porte selon l'une quelconque des revendications précédentes, dans laquelle le dispositif d'affichage (3) est conçu comme un affichage papier électronique.

6. Poignée de porte selon l'une quelconque des revendications précédentes, dans laquelle le dispositif d'affichage (3) et le dispositif d'actionnement (4) présentent en outre respectivement une surface comportant deux zones de surface orientées dans des directions différentes et dans laquelle le dispositif d'affichage (3) est en particulier conçu
- pour afficher une pluralité de boutons (8, 9, 11, 12, 13) sur une première zone de surface et
- pour afficher un élément coulissant (14), ci-après appelé « curseur (14) » sur la deuxième zone de surface.

7. Poignée de porte selon la revendication 6, dans laquelle le dispositif de commande est conçu pour émettre un signal uniquement en réponse à un actionnement simultané de l'un des boutons (8, 9, 11, 12, 13) et du curseur (14) pour
- actionner un lève-vitre ou
- déverrouiller une porte (23a, 23b).

8. Poignée de porte selon l'une quelconque des revendications précédentes, comprenant en outre
- un cache de haut-parleur (7) de préférence partiellement transparent et/ou
- une source lumineuse pour générer un éclairage d'ambiance.

9. Habillage intérieur de porte pour un moyen de locomotion (10) comprenant
- une poignée de porte (1) selon l'une quelconque des revendications précédentes et
- un haut-parleur (6) disposé au moins partiellement derrière la poignée de porte (1).

10. Moyen de locomotion comprenant une poignée de porte (1) selon l'une quelconque des revendications 1 à 8 précédentes ou un habillage intérieur de porte selon la revendication 9.
